# EUROPEAN PATENT APPLICATION

(11) **EP 4 322 188 A1**
(43) Date of publication of application: **14.02.2024**
(21) Application number: 23186277.2
(22) Date of filing: 19.07.2023
(51) Int. Cl.: H01F 27/28, H01F 30/10, H01F 5/02, H01F 5/04, H01F 27/30, H01F 27/32

(54) **TRANSFORMER, DC-DC CONVERTER AND VEHICLE**

(30) Priority: 08.08.2022 CN 202210942311
(71) Applicant: Valeo eAutomotive Shenzhen Co., Ltd, Shenzhen Guangdong 518128 (CN)
(72) Inventor: LIU, Quan, Shenzhen, 518128 (CN); LI, Ronghui, Shenzhen, 518128 (CN); HE, Zhongjie, Shenzhen, 518128 (CN); WANG, Xiunan, Shenzhen, 518128 (CN); ZENG, Sixiong, Shenzhen, 518128 (CN); YUAN, Cheng, Shenzhen, 518128 (CN)
(74) Representative: Valeo Powertrain Systems

(57) **Abstract**

The present disclosure relates to a transformer (100) with a modular design, the transformer (100) comprising: a front-end assembly (10) comprising an input electrode (12) for receiving an input voltage; a back-end assembly (20) comprising an output electrode (22), for outputting an output voltage converted by the transformer (100); and a magnetic core (30), the magnetic core (30) being configured to assemble the front-end assembly (10) and the back-end assembly (20) together. The back-end assembly (20) comprises one or more conversion modules (20a), each conversion module (20a) being capable of independently converting the input voltage into the output voltage in collaboration with the magnetic core (30), and the power of the transformer (100) is the sum of the power of all the conversion modules (20a). The present disclosure further relates to a direct current-to-direct current converter comprising such a transformer (100), a vehicle comprising such a direct current-to-direct current converter, and a method for assembling such a transformer (100).

## Description

### TECHNICAL FIELD

The present disclosure relates to the field of transformers, in particular to a transformer with a modular design, a direct current-to-direct current converter comprising the transformer, and a vehicle comprising the direct current-to-direct current converter. The present disclosure further relates to a method for assembling a transformer.

### BACKGROUND

In a new-energy vehicle, an output voltage produced by a power battery is too high to be directly used to supply power to a low-voltage electrical component, for example, a 12 V electrical component. In order to provide low-voltage power supply, an excessively high direct voltage outputted by a power battery needs to be converted to an appropriate direct voltage by a direct current-to-direct current converter. With a direct current-to-direct current converter commonly used in vehicles, a high-voltage direct current is first inverted to a high-voltage alternating current, and the high-voltage alternating current is converted by a transformer into a low-voltage alternating current, which is then rectified into a low-voltage direct current to provide low-voltage power supply.

Load demand for low-voltage power supply varies considerably with vehicle models, ranging, for example, from 1.2 kW to 4.8 kW. Correspondingly, direct current-to-direct current converters need to have varying power ratings. The power rating of a direct current-to-direct current converter is determined by the power rating of the transformer. Transformers with different power ratings usually have different designs and dimensions, and their components are also different, not interchangeable with each other. Different tools are needed for the production and manufacturing of these different components, which results in an increase in production costs. Moreover, for different transformers, designs need to be created and certifications obtained, which results in an increase in development costs.

Therefore, a universal transformer design is needed to address the above-described problems. In such a transformer design, transformers with different power ratings can share most of their components, or only simple adjustments need to be made to the components.

### SUMMARY

An objective of the present disclosure is to propose a transformer for solving the above-mentioned technical problems, the transformer having a modular design that allows an increase or decrease in power rating by simply adding or removing modules, thereby meeting the load requirements for low-voltage power supply in different vehicle models.

A transformer with a modular design according to the present disclosure comprises: a front-end assembly comprising an input electrode for receiving an input voltage; a back-end assembly comprising an output electrode, for outputting an output voltage converted by the transformer; and a magnetic core configured to assemble the front-end assembly and the back-end assembly together. The back-end assembly comprises one or more conversion modules, each conversion module being capable of independently converting the input voltage into the output voltage in collaboration with the magnetic core. The power of the transformer is the sum of the power of all the conversion modules.

In the present disclosure, the voltage conversion functions of each conversion module of the transformer are implemented independently of one another, without the need for cooperation between a plurality of conversion modules. Therefore, a conversion module may be added to or removed from the transformer to change the power rating of the transformer, thereby meeting the load requirements of low-voltage power supply systems in different vehicle models. Thus, this modular design allows a reduction in the development and production costs of transformers.

A transformer according to the present disclosure may also have one or more of the following features individually or in combination.

According to an embodiment of the present disclosure, the front-end assembly comprises a first holder, the conversion module comprises a second holder, the first holder has a first mounting portion, the second holder has a second mounting portion, and the second mounting portion is connectible to the first mounting portion to mount the back-end assembly onto the front-end assembly. Such a configuration allows the front-end assembly and back-end assembly of the transformer to be assembled more tightly together.

According to an embodiment of the present disclosure, the back-end assembly comprises a plurality of identical conversion modules, and the second holder further comprises a third mounting portion, the third mounting portion being connectible to the second mounting portion to assemble two adjacent conversion modules together. With such a configuration, a plurality of conversion modules of the back-end assembly are assembled together to secure the back-end assembly more firmly.

According to an embodiment of the present disclosure, the first and third mounting portions are mounting slots, and the second mounting portion is a protrusion that can be inserted into the mounting slot. It is conceivable that the second mounting portion may also be arranged as a mounting slot, while the first and third mounting portions may be arranged as protrusions that can be inserted into the mounting slot. Further, the first to third mounting portions may also have other configurations connectible to each other that are known to those of ordinary skill in the art.

According to an embodiment of the present disclosure, the conversion module comprises a primary coil wound around the second holder, the first holder has a first guide groove, the second holder has a second guide groove, and the first guide groove and the second guide groove are aligned with each other to guide the wire of the primary coil to the input electrode, the wire being electrically connected to the input electrode. Specifically, when the back-end assembly comprises a plurality of conversion modules, the second guide grooves of the second holder thereof are aligned with each other and are all aligned with the first guide groove of the front-end assembly. Therefore, the wires of a plurality of conversion modules may be guided and electrically connected to the input electrode of the front-end assembly.

According to an embodiment of the present disclosure, the input electrode is fixed on the first holder and the first holder further comprises a wire holding portion for holding the wire of the primary coil. Compared with the first guide groove of the front-end assembly, the wire holding portion supports the input electrode, having an effect of holding the wire, which makes it easier to connect the wire to the input electrode. After the wire is connected to the input electrode, the wire holding portion can withstand the stress, tensile force, etc. applied on the wire, thereby preventing damage to the electrical connection between the wire and the input electrode.

According to an embodiment of the present disclosure, the conversion module comprises a secondary bus fixed on the second holder, the secondary bus being connected to the output electrode. By electromagnetic induction, an output voltage is generated on the secondary bus and outputted through the output electrode.

According to an embodiment of the present disclosure, the output electrode is integrally formed with the secondary bus.

According to an embodiment of the present disclosure, the front-end assembly further comprises a secondary bus and an output electrode that are fixed on the first holder, the secondary bus being connected to the output electrode. Therefore, the secondary bus on the front-end assembly may also generate an output voltage on the output electrode by electromagnetic induction.

According to an embodiment of the present disclosure, the plurality of identical conversion modules are connected in parallel.

According to an embodiment of the present disclosure, the magnetic core comprises two magnetic core halves, each magnetic core half comprising a central cylinder, the central cylinder passing through the first and second holders. Thus, the magnetic core assembles the front-end assembly and the back-end assembly together through the central cylinder.

According to an embodiment of the present disclosure, the magnetic core half further comprises a frame, the frame comprising a first part extending vertically from one end of the central cylinder in two opposite directions, and a second part extending in parallel to the central cylinder from the free end of the first part. The frame surrounds the front-end assembly and the back-end assembly from the outside, which makes the transformer more integrated. The above structure of the magnetic core half is also beneficial for guiding a magnetic field by the magnetic core half.

The present disclosure further relates to a direct current-to-direct current converter comprising a transformer as described above.

The present disclosure further relates to a vehicle comprising a direct current-to-direct current converter as described above.

The present disclosure further relates to an assembly method for assembling a transformer, the assembly method comprising: providing a front-end assembly, which comprises a first holder and an input electrode fixed to the first holder; providing a back-end assembly, which comprises a plurality of identical conversion modules, the conversion module comprising a second holder, an output electrode fixed to the second holder, and a primary coil wound around the second holder; providing a magnetic core, which comprises two magnetic core halves, each magnetic core half comprising a central cylinder; selecting a conversion module from the back-end assembly and connecting the second holder of the conversion module to the first holder of the front-end assembly; passing the central cylinder through the first and second holders; and electrically connecting the primary coil to the input electrode.

According to an embodiment of the present disclosure, the assembly method further comprises: before passing the central cylinder through the first holder and the second holder, selecting another one or more conversion modules from the back-end assembly, and sequentially connecting the second holders of the other one or more conversion modules to the second holders of the previous conversion module.

### BRIEF DESCRIPTION OF THE DRAWINGS

To explain the technical solution of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below have not been drawn by meticulously reducing or enlarging actual dimensions in equal proportion, but focus on showing the substance of the present disclosure.
Fig. 1A and Fig. 1B are respectively a perspective view and an exploded view of a transformer according to an embodiment of the present disclosure;
Fig. 2 is a perspective view of the front-end assembly of the transformer;
Fig. 3 is a perspective view of a conversion module of the back-end assembly of the transformer;
Fig. 4 is an exploded view of the conversion module shown in Fig. 3;
Fig. 5 is a schematic diagram of one magnetic core half of the magnetic core.

In all of the drawings, identical or similar components are indicated with identical numerals.

### DETAILED DESCRIPTION

In order to clarify the objective, technical solution and advantages of embodiments of the present disclosure, the technical solution of embodiments of the present disclosure is described clearly and completely below in conjunction with the drawings accompanying embodiments of the present disclosure.

Unless otherwise defined, technical terms or scientific terms used herein shall have the common meanings understood by those skilled in the art. "A", "one", "said" and similar terms used in the description and claims of the patent application of the present disclosure, rather than meaning a quantity limit, mean that there is at least one. "Comprise", "include", or any other similar term means that the element or object appearing before the term covers the elements or objects and equivalents thereof listed after the term but does not exclude other elements or objects.

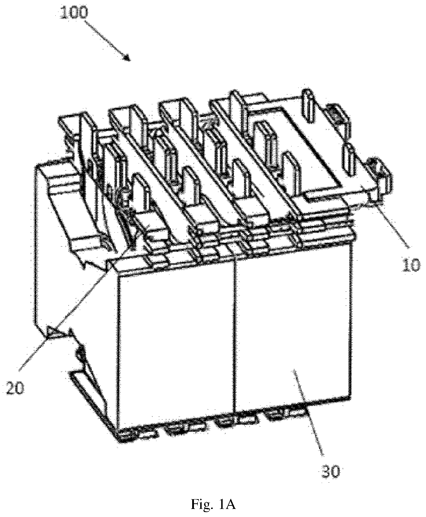

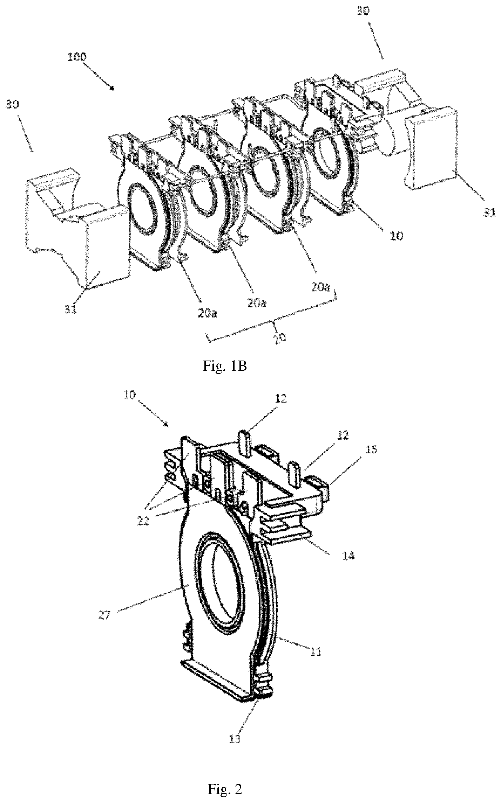

Fig. 1A and Fig. 1B are respectively a perspective view and an exploded view of a transformer 100 according to an embodiment of the present disclosure. The transformer 100, for example, is a component for voltage conversion in a direct current-to-direct current converter in a vehicle, which receives an input voltage (for example, a high-voltage alternating current from a power battery after inversion) and converts it into an output voltage (for example, a low-voltage alternating current, which, after being rectified, may be used as low-voltage direct-current supply to the vehicle) by electromagnetic induction.

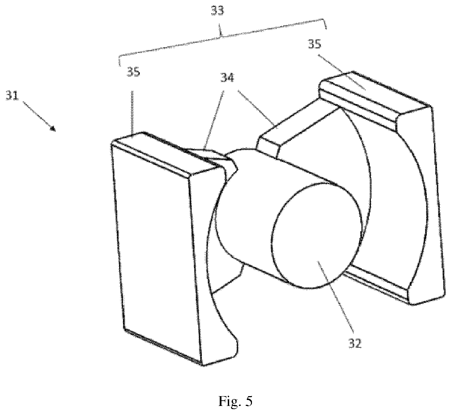

As shown in the figure, the transformer 100 comprises a front-end assembly 10 for receiving an input voltage, a back-end assembly 20 for outputting a converted output voltage, and a magnetic core 30. The magnetic core 30 comprises two magnetic core halves 31. Referring to Fig. 5, each core half 31 comprises a central cylinder 32 and a frame 33. The frame 33 comprises a first part 34 extending vertically from one end of the central cylinder 32 in two opposite directions, and a second part 35 extending in parallel to the central cylinder 32 from the free end of the first part 34. The second part 35 has a fan-shaped inner surface, suitable for accommodating the front-end assembly 10 and the back-end assembly 20.

In the assembly structure of the transformer 100, the central cylinder 32 passes through the front-end assembly 10 and the back-end assembly 20, and the frame 33 surrounds the front-end assembly 10 and the back-end assembly 20 from the outside, so that the two assemblies are assembled together. The two magnetic core halves 31 may be bonded into a whole by shape matching, being bonded to opposite surfaces, or being wrapped with a tape on the outside, so that the transformer 100 is ultimately assembled.

The transformer 100 has a modular design. Specifically, the number of conversion modules 20a included in the back-end assembly 20 may be increased or decreased according to the required power. In the example shown in Fig. 1A-1B, the back-end assembly 20 comprises 3 conversion modules 20a. If relatively low power is required, the back-end assembly 20 may comprise 1 or 2 conversion modules 20a. If higher power is required, the number of conversion modules 20a included in the back-end assembly 20 may be increased.

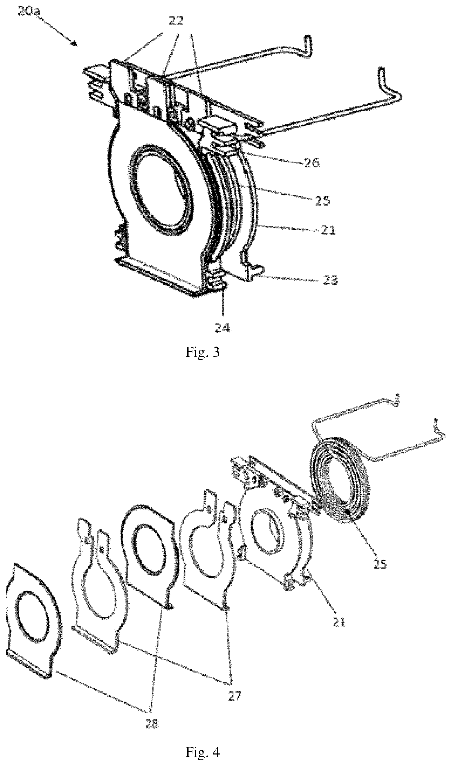

Referring to Fig. 2 and Fig. 3, the front-end assembly 10 comprises a first holder 11, while the conversion module 20a of the back-end assembly 20 comprises a second holder 21. The first holder 11 and the second holder 21 both have a through hole in the centre, and the central cylinder 32 of the magnetic core half 31 can pass through the through hole.

The first holder 11 comprises a first mounting portion 13 in the form of a mounting slot at its bottom. The second holder 21 correspondingly comprises a second mounting portion 23 in the form of a protrusion. The first mounting portion 13 and the second mounting portion 23 are aligned with each other and match in shape. In the assembly structure of the transformer 100, the second mounting portion 23 is connected to the first mounting portion 13 to mount the back-end assembly onto the front-end assembly. In addition, the second holder 21 further comprises a third mounting portion 24 in the form of a mounting slot, which can have the same size and structure as the first mounting portion 13. The third mounting portion 24 and second mounting portion 23 of two adjacent conversion modules 20a are aligned with each other and joined together in the assembly structure of the transformer 100. Similarly, a plurality of conversion modules 20a may be assembled together by being connected sequentially. By the above structure, the front-end and back-end assemblies of the transformer 100 may be mechanically assembled together.

The input electrode 12 fixed on the first holder 11 of the front-end assembly 10 is configured to receive an input voltage from the transformer 100. The conversion module 20a comprises a primary coil 25 electrically connected to the input electrode 12, the primary coil 25 being wound around the second holder 21 surrounding the through hole of the second holder 21. The first holder 11 further has a first guide groove 14, and the second holder 21 has a second guide groove 26. The first guide groove 14 and the second guide groove 26 are aligned with each other to guide the wire of the primary coil 25 to the first holder 11. Then, the wire of the primary coil 25 is bent to extend upwards, held by the wire holding portion 15 of the first holder 11, and then connected to the input electrode 12. The two ends of the wire of the primary coil 25 are respectively connected to one of the two input electrodes 12 on the first holder 11. When a plurality of conversion modules 20a are provided, the primary coil 25 of each conversion module 20a is guided to be connected to the input electrode 12, which means that the primary coil 25 of each conversion module 20a is connected in parallel between the two input electrodes 12. The electrical connections of each primary coil 25 ensure that the magnetic fields generated thereby are superposed onto each other, producing a synergistic effect.

The conversion module 20a further comprises a secondary bus 27 fixed on the second holder 21, which is separated from the primary coil 25 by the second holder 21. The secondary bus 27 is preferably formed of a metal sheet, which extends beyond the second holder 21 to form an output electrode 22, thereby outputting the converted input voltage.

The input electrode 12 and the output electrode 22 are each in the form of a sheet electrode and are located on the same side of the transformer 100. Such an arrangement allows the transformer 100 to be easily connected to an external connector. Specifically, when the external connector is a printed circuit board, a hole may be made in the printed circuit board, being positioned and sized to be suitable for the insertion of the input electrode 12 and the output electrode 22. Thus, the transformer 100 is connectible to the printed circuit board by plugging.

Fig. 4 shows in detail the conversion module 20a in an exploded view. As shown in the figure, the second holder 21 of the conversion module 20a has a sandwich structure, comprising a central tube around which the primary coil 25 is wound and two plates arranged on both sides to clamp the primary coil 25. The conversion module 20a comprises two secondary buses 27 fixed to one of the plates. An insulating trip 28 is arranged between the two secondary buses 27, and the outer side of the outer secondary bus 27 is also covered with an insulating trip 28. The two secondary buses 27 are arranged in opposite directions, wherein their ends arranged in the middle are electrically connected and form intermediate output electrodes, while their ends arranged on both sides form the other two side output electrodes.

When the transformer 100 is operating, the primary coil 25, driven by an input voltage, generates an alternating current. The alternating current generates an alternating magnetic field by electromagnetic induction, and the alternating magnetic field is guided by the central cylinder 32 of the magnetic core half 31 to pass through the secondary bus 27, causing the generation of an induced voltage across the secondary bus 27, namely an output voltage. The ratio of the input voltage to the output voltage is changeable simply by changing the number of windings of the primary coil 25.

Referring to Fig. 2, the secondary bus 27 is also fixed to the first holder 11 of the front-end assembly 10 and is formed with an output electrode 22. An alternating magnetic field generated by the primary coil 25 of a conversion module 20a near the front-end assembly 10 will also be guided through the secondary bus 27 fixed on the first holder 11, so that the bus generates an output voltage. Therefore, the front-end assembly 10 may also output an output voltage converted by a transformer.

Preferably, the conversion modules 20a of the transformer 100 are identical, with the same electrical characteristics and mechanical structure, and the same output power, for example, 1.2 kW. All the conversion modules 20a may be produced using identical winding tools and processing tools. Except for the need to extend the central cylinder 32 of the magnetic core half 31 and the second part 35 of the frame 33, the production needs for various transformers 100 with different power ratings may be met simply by maintaining a part inventory of and production tools for only one type of the conversion module 20a.

It is conceivable that the conversion modules 20a of the transformer 100 may also vary and may have different output voltages or output power. For example, two conversion modules 20a with output power of 1 kW and 2 kW, respectively, may be combined to form a transformer 100 with a power rating of 3 kW.

A method for assembling the transformer 100 according to the present disclosure will be described below, the assembly method comprising the steps of:
Step 1: providing a front-end assembly 10, the front-end assembly 10 comprising a first holder 11 and an input electrode 12 fixed to the first holder 11;
Step 2: providing a back-end assembly 20, the back-end assembly 20 comprising a plurality of identical conversion modules 20a, the conversion module 20a comprising a second holder 21, an output electrode 22 fixed to the second holder 21, and a primary coil 25 wound around the second holder 21;
Step 3: providing a magnetic core 30, the magnetic core 30 comprising two magnetic core halves 31, each magnetic core half 31 comprising a central cylinder 32;
Step 4: selecting a conversion module 20a from the back-end assembly 20 and connecting the second holder 21 of the conversion module 20a to the first holder 11 of the front-end assembly 10;
Step 5: passing the central cylinder 32 through the first holder 11 and the second holders 21;
Step 6: electrically connecting the primary coil 25 to the input electrode 11.

When a transformer 100 comprising a plurality of conversion modules 20a is to be assembled, before the central cylinder 32 is passed through the first holder 11 and the second holder 21, another one or more conversion modules 20a may be selected from the back-end assembly 20 as needed, and the second holders 21 of the other one or more conversion modules 20a may be sequentially connected to the second holders 21 of the previous conversion module 20a.

According to another aspect of the present disclosure, a direct current-to-direct current converter is proposed, which comprises a transformer 100 as described above.

According to another aspect of the present disclosure, a vehicle is proposed, which comprises a direct current-to-direct current converter as described above.

The vehicle may be a plug-in hybrid electric vehicle, or may also be a battery electric vehicle or another type of vehicle. Based on the above description, the motor vehicle can implement the functions of the transformer and the direct current-to-direct current converter as described above, and has the above-described beneficial effects.

Certain features, structures or characteristics in one or more embodiments of the present disclosure may be combined appropriately.

The above is a description of the present disclosure, and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be included in the scope of the present disclosure as defined by the claims. It should be understood that the above is a description of the present disclosure, and the present disclosure should not be regarded as being limited to the specific embodiments disclosed; moreover, modifications to the disclosed embodiments and other embodiments are intended to be included in the scope of the present disclosure.

## Claims

1. A transformer (100) with a modular design, and the transformer (100) comprises:
a front-end assembly (10) comprising an input electrode (12) for receiving an input voltage;
a back-end assembly (20) comprising an output electrode (22) for outputting an output voltage converted by the transformer (100);
a magnetic core (30), the magnetic core (30) being configured to assemble the front-end assembly (10) and the back-end assembly (20) together,
wherein the back-end assembly (20) comprises one or more conversion modules (20a), each conversion module (20a) being capable of independently converting the input voltage into the output voltage in collaboration with the magnetic core (30), and the power of the transformer (100) is the sum of the power of all the conversion modules (20a).

2. The transformer (100) according to Claim 1, wherein the front-end assembly (10) comprises a first holder (11), the conversion module (20a) comprises a second holder (21), the first holder (11) has a first mounting portion (13), the second holder (21) has a second mounting portion (23), and the second mounting portion (23) is connectible to the first mounting portion (13) to mount the back-end assembly (20) onto the front-end assembly (10).

3. The transformer (100) according to Claim 2, wherein the back-end assembly (20) comprises a plurality of identical conversion modules (20a), and the second holder (21) further comprises a third mounting portion (24), the third mounting portion (24) being connectible to the second mounting portion (23) to assemble two adjacent conversion modules (20a) together.

4. The transformer (100) according to Claim 3, wherein the first mounting portion (13) and the third mounting portion (24) are mounting slots, and the second mounting portion (23) is a protrusion that can be inserted into the mounting slot.

5. The transformer (100) according to any one of Claims 2 to 4, wherein the conversion module (20a) comprises a primary coil (25) wound around the second holder (21), the first holder (11) has a first guide groove (14), the second holder (21) has a second guide groove (26), and the first guide groove (14) and the second guide groove (26) are aligned with each other to guide a wire of the primary coil (25) to the input electrode (12), the wire being electrically connected to the input electrode (12).

6. The transformer (100) according to Claim 5, wherein the input electrode (12) is fixed on the first holder (11), and the first holder (11) further comprises a wire holding portion (15) for holding the wire of the primary coil (25).

7. The transformer (100) according to any one of Claims 2 to 4, wherein the conversion module (20a) comprises a secondary bus (27) fixed to the second holder (21), the secondary bus (27) being connected to the output electrode (22).

8. The transformer (100) according to Claim 7, wherein the output electrode (22) is integrally formed with the secondary bus (27).

9. The transformer (100) according to any one of Claims 2 to 4, wherein the front-end assembly (10) further comprises a secondary bus (27) and an output electrode (22) that are fixed on the first holder (11), the secondary bus (27) being connected to the output electrode (22).

10. The transformer (100) according to Claim 9, wherein the output electrode (22) is integrally formed with the secondary bus (27).

11. The transformer (100) according to Claim 3 or 4, wherein the plurality of identical conversion modules (20a) are connected in parallel.

12. The transformer (100) according to any one of Claims 2 to 4, wherein the magnetic core (30) comprises two magnetic core halves (31), each magnetic core half (31) comprising a central cylinder (32), the central cylinder (32) passing through the first holder (11) and the second holder (21).

13. The transformer (100) according to Claim 12, wherein the magnetic core half (31) further comprises a frame (33), the frame (33) comprising a first part (34) extending vertically from one end of the central cylinder (32) in two opposite directions, and a second part (35) extending in parallel to the central cylinder (32) from the free end of the first part (34).

14. A DC-DC converter, comprises a transformer (100) according to any one of Claims 1 to 13.

15. A vehicle, comprises a direct current-to-direct current converter according to Claim 14.
